# EUROPÄISCHE PATENTSCHRIFT

(11) **EP 1 660 348 B1**
(45) Veröffentlichungstag und Bekanntmachung des Hinweises auf die Patenterteilung: **27.01.2010**
(21) Anmeldenummer: 04764708.6
(22) Anmeldetag: 02.09.2004
(51) Int. Cl.: B60N 2/46

(54) **ARMLEHNE, INSBESONDERE FÜR EIN KRAFTFAHRZEUG**
ARMREST, ESPECIALLY FOR A MOTOR VEHICLE
ACCOUDOIR, EN PARTICULIER POUR VEHICULE AUTOMOBILE

(30) Priorität: 02.09.2003 DE 10340797
(43) Veröffentlichungstag der Anmeldung: 31.05.2006
(73) Patentinhaber: Johnson Controls GmbH, 51399 Burscheid (DE)
(72) Erfinder: DILLINGER, Thomas, 42929 Wermelskirchen (DE); COLLINS, David, Laindon, Basildon SS 15 6QT (GB)
(74) Vertreter: Wolff, Felix
(86) Internationale Anmeldenummer: PCT/EP2004/009747
(87) Internationale Veröffentlichungsnummer: WO 2005/023584

(56) Entgegenhaltungen:
- EP-A- 0 960 767
- DE-A- 2 931 237
- DE-A- 3 036 302
- DE-A- 3 414 316
- DE-A- 3 505 399
- DE-A- 4 035 855
- DE-A- 19 811 523
- US-A- 3 909 063
- US-A- 5 752 739

## Beschreibung

Die Erfindung betrifft eine Armlehne, insbesondere für ein Kraftfahrzeug, mit einem Lehnenkörper und mit einer Halterung, wobei der Lehnenkörper beidseitig jeweils einen Achszapfen und einen Anschlagzapfen aufweist, wobei die Halterung beidseitig jeweils ein Schwenklager und eine Anschlagnut aufweist und wobei die Achszapfen in die Schwenklager einsetzbar und um eine Drehachse schwenkbar sind.

Beispielsweise aus der Druckschrift DE 198 11 523 A1 ist eine solche Armlehne, insbesondere für ein Kraftfahrzeug, bekannt, wobei die Armlehne einen Lehnenkörper aufweist, der zweiseitig hervorragende Führungszapfen aufweist, die jeweils in einer kreisbogenförmigen Führungsnut der Haltevorrichtung um eine Drehachse verschwenkbar geführt werden. Hierbei ist nachteilig, dass der Lehnenkörper bei seiner Montage ausschließlich in Richtung der Einfühmuten der Haltevorrichtung ausgerichtet in einer im Wesentlichen geradlinigen Bewegung bewegt und damit befestigt werden kann. Dies erhöht den Aufwand bei der Montage des Lehnenkörpers in der Haltevorrichtung und verteuert damit die Montage. Weiterhin wird damit die Gefahr erhöht, dass Fehlmontagen auftreten, was die Kosten, insbesondere für die Montage, weiter erhöht. Weiterer Stand der Technik sind die US-A-3 909 063 und die US-A-5 752 739.

Der Erfindung liegt daher die Aufgabe zugrunde, eine Armlehne zu schaffen, die einfach und kostengünstig herstellbar ist und die darüber hinaus einfach, kostengünstig und sicher montierbar ist und somit die Nachteile des Standes der Technik vermeidet.

Diese Aufgabe wird erfindungsgemäß durch eine Armlehne gelöst, insbesondere eine Armlehne für ein Kraftfahrzeug, wobei die Armlehne einen Lehnenkörper und eine Halterung aufweist, wobei der Lehnenkörper beidseitig jeweils einen Achszapfen und einen Anschlagzapfen aufweist, wobei die Halterung beidseitig jeweils ein Schwenklager und eine Anschlagnut aufweist, wobei die Achszapfen in die Schwenklager einsetzbar und um eine Drehachse schwenkbar sind, dadurch gekennzeichnet, dass die maximale Ausdehnung der Anschlagzapfen in Richtung der Drehachse kleiner ist als der Abstand der Schwenklager. Hierdurch ist es in vorteilhafter Weise möglich, dass die Anschlagzapfen eine Montage der Armlehne an der Halterung nicht mehr bzw. in geringerem Maße behindern. Hierdurch wird die Fehlerhäufigkeit bei einer Montage der Armlehne reduziert und somit die dadurch hervorgerufenen Kosten gesenkt.

Besonders bevorzugt ist eine Ausführungsform, bei der der Lehnenkörper einen Bereich möglicher Montagepositionen aufweist, bei denen eine durch die Achszapfen und den Anschlagzapfen gebildete Ebene sich in einem vorgegebenen maximalen Winkelbereich befindet. Hierdurch wird die Montage der Armlehne an der Halterung vereinfacht, Fehlermöglichkeiten bei der Montage vermieden und daher die Armlehne insgesamt kostengünstiger gestaltet.

Weiterhin ist eine Ausführungsform bevorzugt, bei der der Winkelbereich etwa 15° bis etwa 50° umfasst, insbesondere etwa 20° bis etwa 40°, besonders bevorzugt etwa 25° bis etwa 35°. Hierdurch wird in besonderer Weise die Montage der Armlehne vereinfacht und damit kostengünstiger gestaltet, weil die Armlehne bzw. der Lehnenkörper in unterschiedlichen Positionen motierbar ist.

Weiterhin ist eine Ausführungsform bevorzugt, bei der die Anschlagzapfen im Wesentlichen parallel zu den Achszapfen sind. Hierdurch ist in besonders einfacher und kostengünstiger Weise die Halterung und Befestigung sowie die Führung der schwenkbar gelagerten Armlehne in der Halterung bzw. an der Halterung möglich.

Bei einer besonders bevorzugten Ausführungsform sind die Anschlagzapfen mittels eines einstückigen Anschlagzapfenteils und/oder sind die Achszapfen mittels eines einstückigen Achszapfenteils gebildet. Hierdurch ist es in besonders einfacher und kostengünstiger Weise möglich, die Achs- bzw. Anschlagzapfen dadurch zu realisieren, dass ein durchgängiges Rohr bzw. ein durchgängiges anderes Profil die Zapfen beidseitig bildet. Ein solches Rohr bzw. ein solches Profil ist insbesondere als Metallrohr bzw. als Metallprofil vorgesehen.

Weiterhin ist eine Ausführungsform bevorzugt, wobei die Enden der Achszapfen jeweils erste Kappen aufweisen und/oder wobei die Enden der Anschlagzapfen jeweils zweite Kappen aufweisen, wobei die ersten und/oder zweiten Kappen jeweils eine Rille aufweisen. Hierdurch ist in besonders einfacher Weise ermöglicht, dass eine gute Führung bzw. eine gute Lagerung der Armlehne an der Halterung möglich ist. Insbesondere dadurch, dass die Kappen mittels eines speziell auf die Lagerung bzw. auf die Führung hin optimierten Materials, insbesondere eines Kunststoffes, hergestellt sind, ist es möglich, Geräusche und Reibung, die bei einer Bewegung der Armlehne bzw. des gesamten Körpers gegenüber der Halterung auftreten könnte, möglichst zu vermeiden. Erfindungsgemäß ist es insbesondere vorgesehen, die Kappen aus Polyacetal-Kunststoff herzustellen. Dieses Material ist besonders reibarm und verursacht geringe Geräusche.

Weiterhin ist es in einer bevorzugten Ausführungsform vorgesehen, dass ein Sicherungsmittel zur Sicherung des Achszapfens im Schwenklager ist. Hierdurch ist es auf einfacher Weise möglich, dass der Lehnenkörper in der Halterung gesichert befestigt ist und daher gegen ein Herausnehmen bzw. gegen ein Herausgeschleudertwerden, insbesondere für den Fall eines Unfalls des Kraftfahrzeugs, d.h. beim Auftreten von sehr hohen Beschleunigungen auf die Armlehne, gesichert ist.

Weiterhin ist es in einer bevorzugten Ausführungsform so, dass das Sicherungsmittel an der Halterung befestigt ist. Hierdurch ist es vorteilhaft möglich, dass das Sicherungsmittel vor der Montage des Lehnenkörpers mit der Halterung verbunden werden kann und somit die Montage des Lehnenkörpers bzw. der Armlehne entscheidend vereinfacht und daher verbilligt werden kann.

Vorzugsweise ist weiterhin das Sicherungsmittel eine Feder und insbesondere eine Drahtfeder, wobei insbesondere das Sicherungsmittel zur Sicherung radial auslenkbar ist. Hierdurch ist in besonders einfacher Weise ein Sicherungsmittel vorsehbar. Die Feder ist dabei in einer bevorzugten Ausführungsform durch eine oder mehrere Öffnungen der Halterung hindurchgeführt und durch ihre Formgebung sowie durch die Formgebung der Halterung in diesem Bereich vorgespannt, so dass die Sicherungsfunktion gut geleistet werden kann. Beim Einbringen des Achszapfens in das Schwenklager wird vorzugsweise eine Drahtfeder in einer Ebene senkrecht zur Drehachse, d.h. also radial, ausgelenkt.

Die Erfindung wird nachfolgend anhand von in der Zeichnung dargestellten Ausführungsbeispielen näher erläutert.
- **Figur 1**: stellt in schematischer Weise eine Aufsicht auf eine erfindungsgemäße Armlehne dar.
- **Figur 2**: zeigt eine Seitenansicht und eine Vorderansicht der erfindungsgemäßen Halterung.

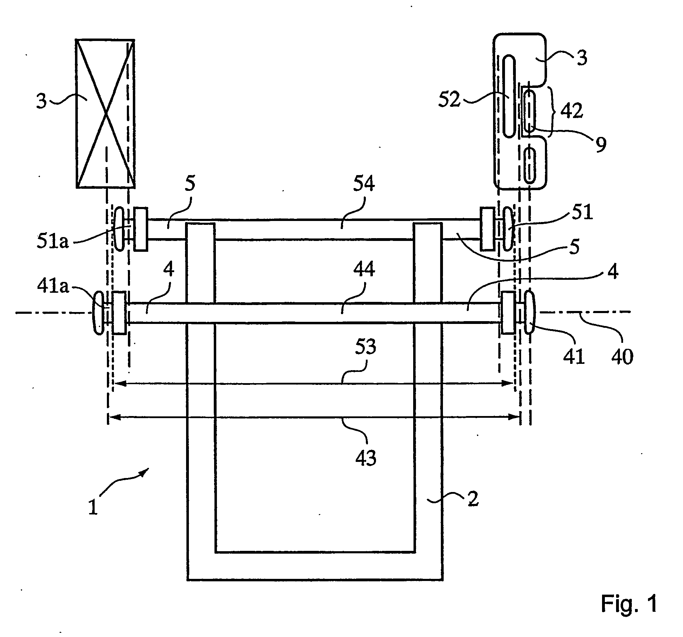

In Figur 1 ist in einer schematischen Darstellung eine erfindungsgemäße Armlehne 1 dargestellt. Die Armlehne 1 umfasst einen Lehnenkörper 2, wobei der Lehnenkörper 2 in der Regel eine Polsterung aufweist, die jedoch in den Figuren nicht dargestellt ist. Der Lehnenkörper 2 wird im Wesentlichen von einem Rahmen gebildet, der dem Lehnenkörper 2 Stabilität verleiht. Der Rahmen des Lehnenkörpers 2 ist beispielsweise mittels eines U-förmig gebogenen Metallrahmens bzw. Metallbauteils vorgesehen. In dieser Ausführungsform ist das offene Ende des U-förmig gebogenen Teils im dargestellten Ausführungsbeispiel zur Rückenlehne hin (d.h. zum Achzapfen hin) orientiert, wobei die Rückenlehne in der Figur nicht dargestellt ist. Der Lehnenkörper 2 kann jedoch auch in einem anderen Material ausgeführt sein, beispielsweise als Kunststoffteil, wobei hier erfindungsgemäß eine Realisierung des Lehnenkörpers 2 mittels eines Polycarbonat-Kunststoffes, insbesondere eines unverstärktes ABS-PC-Blends, bevorzugt ist. Der Lehnenkörper 2 kann weiterhin Aufnahmefächer, Abdeckungen oder Getränkehalter aufweisen, die jedoch in den Figuren nicht dargestellt sind.

Der Lehnenkörper 2 ist verbunden mit einem jeweils beidseitig angeordneten Achszapfen 4 und einem jeweils ebenfalls beidseitig angeordneten Anschlagzapfen 5. Die beidseitig angeordneten Zapfen 4, 5 sind insbesondere dadurch realisiert, dass durchgehende Metallrohre bzw. Metallprofile eine Verbindung einerseits der Achszapfen 4 und andererseits der Anschlagzapfen 5 gewährleisten. Hierbei ist ein die Achszapfen 4 verbindendes Metallrohr bzw. Metallprofil mit dem Bezugszeichen 44 bezeichnet und es ist ein die Anschlagzapfen 5 verbindendes Metallrohr bzw. Metallprofil mit dem Bezugszeichen 54 bezeichnet. Die Zapfen 4,5 können jedoch selbstverständlich beidseitig am Lehnenkörper 2 angebracht sein, ohne dass eine durchgehende Verbindung im Sinne von Rohren bzw. Profilen 44, 54 vorhanden ist. Hierbei wird das die Achszapfen 4 verbindende Metallrohr bzw. Metallprofil 44 im Folgenden auch als Achszapfenteil 44 bezeichnet und es wird das die Anschlagzapfen 5 verbindende Metallrohr bzw. Metallprofil 54 im Folgenden auch als Anschlagzapfenteil 54 bezeichnet.

Die Enden der Zapfen 4, 5 sind jeweils mit aufgesteckten Kappen versehen, wobei erste Kappen 41 auf die Achszapfen 4 aufgesetzt sind und wobei zweite Kappen 51 auf die Anschlagzapfen 5 aufgesetzt sind. Die Kappen 41, 51 weisen beispiel gemäß jeweils eine Nut 41 a, 51 a auf, deren Bedeutung nachfolgend beschrieben wird.

Weiterhin ist die Halterung 3 der erfindungsgemäßen Armlehne 1 derart ausgebildet, dass sie ein Schwenklager 42 und eine Anschlagnut 52 aufweist. Das Schwenklager 42 erfüllt erfindungsgemäß die Aufgabe, den Achszapfen 4 derart zu lagern, dass der Lehnenkörper 2 drehbar bzw. schwenkbar in der Halterung bzw. an der Halterung 3 befestigt ist. Die Anschlagnut 52 übernimmt die Aufgabe, einen Anschlag für die sich bei einer Bewegung des Lehnenkörpers 2 um die Drehachse 40 bewegenden Anschlagzapfen 5 auszubilden, wobei der Anschlag die Bewegung bzw. Drehung des Lehnenkörpers 2 begrenzt. Erfindungsgemäß ist es nun vorgesehen, dass die maximale Ausdehnung 53 der Anschlagzapfen 5 in der Richtung der Drehachse 40 des Lehnenkörpers 2 kleiner ist als der Abstand 43 der Schwenklager 42 der Halterung 3. Insbesondere kommt es hier auf die lichte Weite an, die das Schwenklager 42 bzw. die die das Schwenklager 42 bildenden Bleche bzw. Teile der Halterung 3 aufweisen. Die maximale Ausdehnung 53 der Anschlagzapfen 5 ist erfindungsgemäß kleiner als diese lichte Weite vorgesehen, so dass der Lehnenkörper 2 mit den hieran befestigten Anschlagzapfen 5 zwischen dem Schwenklager 42 hindurchgeführt werden kann. Zur Verdeutlichung ist hierzu in Figur 1 ein erster Pfeil mit dem Bezugszeichen 43 zur Bezeichnung der Breite des Schwenklagers 42 dargestellt. Ein zweiter Pfeil, der mit dem Bezugszeichen 53 versehen ist, gibt die maximale Ausdehnung 53 der Anschlagzapfen 5 in einer Richtung parallel zur Drehachse 40 an. Erkennbar ist, dass die maximale Ausdehnung 53 der Anschlagzapfen 5 kleiner ist als der Abstand 43 der Schwenklager 42. Weiterhin ist aus Figur 1 ersichtlich, dass der Lehnenkörper 2 zwischen zwei symmetrischen Teilen der Halterung 3 angeordnet ist, wobei jedes der Teile der Halterung ein Schwenklager 42 aufweist und entsprechend eine Seite des Lehnenkörpers 2 hält bzw. drehbar/schwenkbar fixiert. Die Einzelheiten der Darstellung der Halterung 3 sind jedoch in Figur 1 der Einfachheit halber lediglich für die in der Figur auf der rechten Seite dargestellte Halterung eingezeichnet. Eine entsprechende symmetrische Ausgestaltung ist selbstverständlich auch für die linke Seite der Halterung 3 vorgesehen. Weiterhin ist selbstverständlich auch eine - alternativ zu der in den Figuren beschriebenen zweistückigen Auslegung der Halterung 3 mögliche - einstückige Auslegung der Halterung 3 möglich. In diesem Fall sind zwei Seitenteile der einstückigen Halterung 3 mit einem (nicht dargestellten) Mittelstück verbunden, so dass die Halterung 3 insgesamt beispielsweise U-förmig ist.

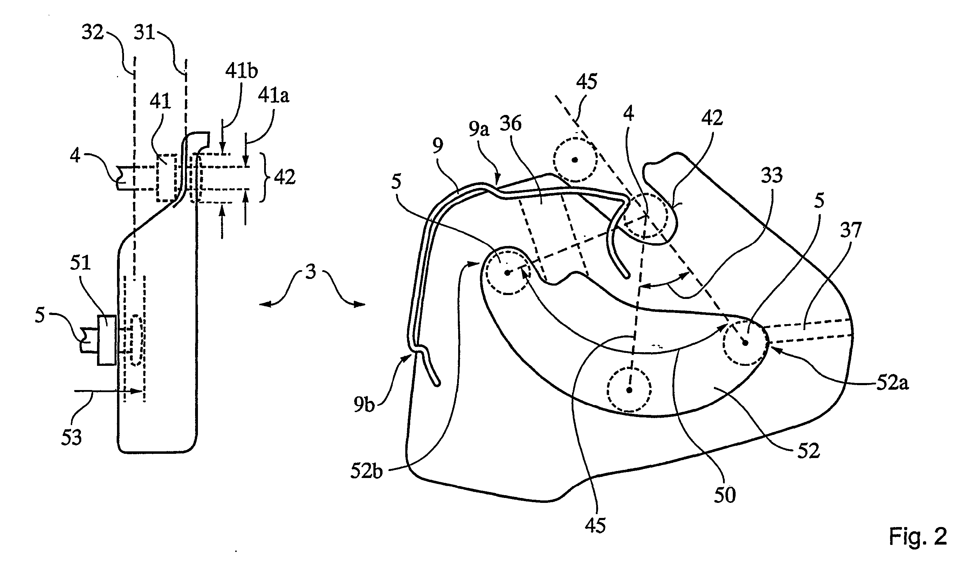

In Figur 2 ist eine Halterung 3 in Seitenansicht und in Vorderansicht dargestellt, wobei die im linken Teil der Figur 2 dargestellte Vorderansicht der Halterung 3 lediglich eine detailliertere Darstellung der einen Seite bzw. des einen Teils der Halterung 3 ist.

Die Halterung 3 weist das Schwenklager 42 auf, in dem ein mittels punktierter Linie angedeuteter Achszapfen 4 angeordnet bzw. gelagert ist. Hierbei ist im rechten Teil der Figur 2 der Einfachheit halber lediglich der Durchmesser des Achszapfens 4 bzw. der (kleinere) Durchmesser der Rille 41 a der ersten Kappe 41 dargestellt. Erkennbar ist, dass der Achszapfen 4 im rechten Teil der Figur 2 durch die als Sicherungsmittel 9 ausgebildete Feder 9 vor einem Entfernen aus dem Schwenklager 42 geschützt ist. Hierbei umgreift die Feder 9 die auf dem Achszapfen 4 befindliche erste Kappe 41 entlang zumindest eines Teilbereichs ihres Umfangs, d.h. "tangential". Die Bewegungsmöglichkeiten der Feder 9 sind derart (radial) vorgesehen, dass sich die Feder 9 "nach unten" durchbiegen kann, um den Achszapfen 4 bzw. die erste Kappe 41 einrasten zu lassen und damit sichern zu können, wobei jedoch vorzugsweise die Feder 9 durch das Material der Halterung 3 daran gehindert wird zurückzufedern, so dass sich eine effektive Sicherung ergibt.

Die Feder 9 ist hierbei insbesondere als Drahtfeder dargestellt bzw. vorgesehen, wobei die Feder 9 an einer ersten Durchbruchstelle 9a bzw. einer ersten Federöffnung 9a durch die insbesondere als Blechstanzteil vorgesehene Halterung 3 hindurchgeführt ist und wobei an einer zweiten Durchbruchstelle 9b bzw. an einer zweiten Federöffnung 9b eine Verrastung der Feder 9 derart möglich ist, dass eine relativ enge Krümmung der Feder 9 eine Einrastung im Material der Halterung 3 erlaubt. Hierdurch kann die Feder 9 zur Sicherung des Achszapfens 4 im Schwenklager 42 vorgespannt sein und damit ihre Sicherungsfunktion übernehmen.

Weiterhin weist die Halterung 3 die Anschlagnut 52 auf, innerhalb der sich der Anschlagzapfen 5 der Armlehne 1 bewegen kann, wenn im Schwenklager 42 der Achszapfen 4 drehbar befestigt ist. An einem ersten Anschlagende 52a und an einem zweiten Anschlagende 52b der Anschlagnut 52 kann sich der Anschlagzapfen 5 bzw. kann sich die auf dem Anschlagzapfen 5 befindliche zweite Kappe 51 nicht mehr weiter bewegen, wobei dem ersten Anschlagende 52a eine Gebrauchstellung der Armlehne 1 entspricht und wobei dem zweiten Anschlagende 52b eine Nichtgebrauchstellung der Armlehne 1, d. h. eine nach oben umgeklappte Einstellung der Armlehne 1, entspricht. Die Anschlagnut 52 definiert daher einen Drehbereich 50, für den in die Halterung 3 eingepassten Lehnenkörper 2.

Bei einer Montage des Lehnenkörpers 2 und damit auch des Achszapfens 4 in das Schwenklager 42 bzw. des Anschlagzapfens 5 in die Anschlagnut 52 muss sich der Lehnenkörper 2 in einer bestimmten Montageposition befinden. Beispielsweise ist es nicht möglich, den Lehnenkörper 2 zu montieren, wenn dieser sich in einer Position befindet, die seiner Position bei hochgeklappter Armlehne entspricht. Mit dem Bezugszeichen 33 ist im rechten Teil der Figur 2 ein maximaler Winkelbereich 33 angegeben, in dem sich die durch den Achszapfen 4 und den Anschlagzapfen 5 definierte Ebene 45 befinden darf, damit der Lehnenkörper 2 noch montierbar ist, d.h. sich in einer Montageposition befindet. Hierbei ist zu berücksichtigen, dass die Halterung 3 eine (im linken Teil der Figur 2 verdeutlichte) erste Ebene 31 aufweist, in der die Befestigung des Achszapfens 4 vorgesehen, d. h. in der sich das Schwenklager 42 befindet, und dass die Halterung 3 weiterhin eine zweite Ebene 32 aufweist, in der sich die Anschlagnut 52 befindet. In einem (im rechten Teil der Figur 2 verdeutlichten und) mittels gestrichelter Linien dargestellten ersten Halterungsbereich 36 sowie in einem ebenfalls mittels gestrichelter Linien dargestellten zweiten Halterungsbereich 37 geht hierbei die Halterung 3 von ihrer ersten Ebene 31 in ihre zweite Ebene 32 und umgekehrt über. Es ist daher zur Festlegung des maximalen Winkelbereichs 33 notwendig, dass beim Einführen sowohl des Achszapfens 4 als auch des Anschlagzapfens 5 in ihre jeweilige Aufnahme (an der Halterung 3) gewährleistet ist, dass der Anschlagzapfen 5 am ersten Halterungsbereich 36 vorbei in die Anschlagnut 52 gleiten kann. Dies ist für den maximalen Winkelbereich 33 gegeben, wobei dieser Winkelbereich etwa 15° bis 50° groß ist, insbesondere 20° bis etwa 40° und besonders bevorzugt etwa 25° bis etwa 35° umfasst.

Es ist beispielsweise vorgesehen, dass die Kappen 41,51 die Nuten 41a, 51a aufweisen, wobei die erste Nut 41 a eine Breite aufweist, die der Materialstärke der Halterung 3 entspricht, so dass das Material der Halterung 3 im Bereich des Schwenklagers 42 in die erste Nut 41 a hineingreift. Hierdurch ist durch die Ausbildung der Nut 41 a der Achszapfen 4 auch in axialer Richtung etwas arretiert. Entsprechend greift die Nut 51 a der zweiten Kappe 51 in das Material der Halterung 3 im Bereich der Anschlagnut 52. Hierdurch ist über den gesamten Bewegungsbereich 50 eine Führung des Anschlagzapfens 5 durch die Anschlagnut 52 gegeben.

### Bezugszeichenliste

- 1: Armlehne
- 2: Lehnenkörper
- 3: Halterung
- 4: Achszapfen
- 5: Anschlagzapfen
- 9: Sicherungsmittel
- 9a: erste Federöffnung
- 9b: zweite Federöffnung
- 31: erste Ebene
- 32: zweite Ebene
- 33: maximaler Winkelbereich
- 36: erster Halterungsbereich
- 37: zweiter Halterungsbereich
- 40: Drehachse
- 41: erste Kappen
- 41a, 51a: Nuten
- 42: Schwenklager
- 43: Abstand der Schwenklager
- 44, 54: Rohre bzw. Profile, Achs-/Anschlagzapfenteile
- 45: Ebene
- 50: Drehbereich
- 51: zweite Kappen
- 52: Anschlagnut
- 52a: erstes Anschlagende
- 52b: zweites Anschlagende
- 53: Ausdehnung der Anschlagzapfen

## Patentansprüche

1. Armlehne (1), insbesondere für ein Kraftfahrzeug, mit einem Lehnenkörper (2) und mit einer Halterung (3), wobei der Lehnenkörper (2) beidseitig jeweils einen Achszapfen (4) und einen Anschlagzapfen (5) aufweist, wobei die Halterung (3) beidseitig jeweils ein Schwenklager (42) und eine Anschlagnut (52) aufweist, wobei die Achszapfen (4) in die Schwenklager (42) einsetzbar und um eine Drehachse (40) schwenkbar sind, **dadurch gekennzeichnet, dass** die maximale Ausdehnung (53) der Anschlagzapfen (5) in Richtung der Drehachse (40) kleiner ist als der Abstand (43) der Schwenklager (42).

2. Armlehne (1) nach Anspruch 1, **dadurch gekennzeichnet, dass** der Lehnenkörper (2) einen Bereich möglicher Montagepositionen aufweist, bei denen eine durch die Achszapfen (4) und den Anschlagzapfen (5) gebildete Ebene (45) sich in einem vorgegebenen maximalen Winkelbereich (33) befindet.

3. Armlehne (1) nach Anspruch 2, **dadurch gekennzeichnet, dass** der Winkelbereich (33) etwa 15° bis etwa 50° umfasst, insbesondere etwa 20° bis etwa 40°, besonders bevorzugt etwa 25° bis etwa 35°.

4. Armlehne (1) nach einem der vorhergehenden Ansprüche, **dadurch gekennzeichnet, dass** die Anschlagzapfen (5) im Wesentlichen parallel zu den Achszapfen (4) sind.

5. Armlehne (1) nach einem der vorhergehenden Ansprüche, **dadurch gekennzeichnet, dass** die Anschlagzapfen (5) mittels eines einstückigen Anschlagzapfenteils (54) und/oder dass die Achszapfen (4) mittels eines einstückigen Achszapfenteils (44) gebildet werden.

6. Armlehne (1) nach einem der vorhergehenden Ansprüche, **dadurch gekennzeichnet, dass** die Enden der Achszapfen (4) jeweils erste Kappen (41) aufweisen und/oder dass die Enden der Anschlagzapfen (5) jeweils zweite Kappen (51) aufweisen, wobei die ersten und/oder zweiten Kappen (41, 51) jeweils eine Rille (41 a, 51 a) aufweisen.

7. Armlehne (1) nach einem der vorhergehenden Ansprüche, **dadurch gekennzeichnet, dass** ein Sicherungsmittel (9) zur Sicherung des Achszapfens (5) im Schwenklager (42) ist.

8. Armlehne (1) nach einem der vorhergehenden Ansprüche, **dadurch gekennzeichnet, dass** das Sicherungsmittel (9) an der Halterung (3) befestigt ist.

9. Armlehne (1) nach einem der vorhergehenden Ansprüche, **dadurch gekennzeichnet, dass** das Sicherungsmittel (9) eine Feder (9), insbesondere eine Drahtfeder, ist, wobei insbesondere das Sicherungsmittel (9) zur Sicherung radial auslenkbar ist.

## Claims

1. Armrest (1), especially for a motor vehicle, with an armrest body (2) and with a fixing mechanism (3), the armrest body (2) having a respective axle pin (4) and a stop pin (5) on both sides, the fixing mechanism (3) having a respective pivot bearing (42) and a stop groove (52) on both sides, the axle pins (4) being insertable into the pivot bearings (42) and being pivotable about an axis of rotation (40), **characterized in that** the maximum extent (53) of the stop pins (5) in the direction of the axis of rotation (40) is smaller than the distance (43) between the pivot bearings (42).

2. Armrest (1) according to Claim 1, **characterized in that** the armrest body (2) has a region of possible installation positions, in which a plane (45) formed by the axle pins (4) and the stop pin (5) is in a predetermined maximum angular range (33).

3. Armrest (1) according to Claim 2, **characterized in that** the angular range (33) comprises approximately 15° to approximately 50°, in particular approximately 20° to approximately 40°, particularly preferably approximately 25° to approximately 35°.

4. Armrest (1) according to one of the preceding claims, **characterized in that** the stop pins (5) are essentially parallel to the axle pins (4).

5. Armrest (1) according to one of the preceding claims, **characterized in that** the stop pins (5) are formed by means of a single-piece stop pin part (54) and/or **in that** the axle pins (4) are formed by means of a single-piece axle pin part (44).

6. Armrest (1) according to one of the preceding claims, **characterized in that** the ends of the axle pins (4) each have first caps (41) and/or **in that** the ends of the stop pins (5) each have second caps (51), the first and/or second caps (41, 51) each having a channel (41a, 51a).

7. Armrest (1) according to one of the preceding claims, **characterized in that** a securing means (9) is for securing the axle pin (4) in the pivot bearing (42).

8. Armrest (1) according to one of the preceding claims, **characterized in that** the securing means (9) is fastened to the fixing mechanism (3).

9. Armrest (1) according to one of the preceding claims, **characterized in that** the securing means (9) is a spring (9), in particular a wire spring, the securing means (9) in particular being radially deflectable for securing purposes.

## Revendications

1. Accoudoir (1), en particulier pour un véhicule automobile, comprenant un corps d'accoudoir (2) et une fixation (3), le corps d'accoudoir (2) présentant des deux côtés à chaque fois un tourillon d'axe (4) et un tourillon de butée (5), la fixation (3) présentant des deux côtés à chaque fois un palier pivotant (42) et une rainure de butée (52), les tourillons d'axe (4) pouvant être insérés dans les paliers pivotants (42) et pouvant pivoter autour d'un axe de rotation (40), **caractérisé en ce que** l'extension maximale (53) des tourillons de butée (5) dans la direction de l'axe de rotation (40) est inférieure à la distance (43) entre les paliers pivotants (42).

2. Accoudoir (1) selon la revendication 1, **caractérisé en ce que** le corps d'accoudoir (2) présente une plage de positions de montage possibles, au niveau desquelles un plan (45) formé par les tourillons d'axe (4) et les tourillons de butée (5) se trouve dans une plage angulaire (33) maximale prédéterminée.

3. Accoudoir (1) selon la revendication 2, **caractérisé en ce que** la plage angulaire (33) vaut environ 15° à environ 50°, en particulier environ 20° à environ 40°, et particulièrement de préférence environ 25° à environ 35°.

4. Accoudoir (1) selon l'une quelconque des revendications précédentes, **caractérisé en ce que** les tourillons de butée (5) sont essentiellement parallèles aux tourillons d'axe (4).

5. Accoudoir (1) selon l'une quelconque des revendications précédentes, **caractérisé en ce que** les tourillons de butée (5) sont formés au moyen d'une partie de tourillon de butée d'une seule pièce (54) et/ou **en ce que** les tourillons d'axe (4) sont formés au moyen d'une partie de tourillon d'axe d'une seule pièce (44).

6. Accoudoir (1) selon l'une quelconque des revendications précédentes, **caractérisé en ce que** les extrémités des tourillons d'axe (4) présentent à chaque fois des premiers capuchons (41) et/ou **en ce que** les extrémités des tourillons de butée (5) présentent à chaque fois des deuxièmes capuchons (51), les premiers et/ou les deuxièmes capuchons (41, 51) présentant à chaque fois une gorge (41a, 51a).

7. Accoudoir (1) selon l'une quelconque des revendications précédentes, **caractérisé en ce qu'**un moyen de fixation (9) est prévu pour la fixation du tourillon d'axe (4) dans le palier pivotant (42).

8. Accoudoir (1) selon l'une quelconque des revendications précédentes, **caractérisé en ce que** le moyen de fixation (9) est fixé à la fixation (3) .

9. Accoudoir (1) selon l'une quelconque des revendications précédentes, **caractérisé en ce que** le moyen de fixation (9) est un ressort (9), en particulier un ressort en fil métallique, le moyen de fixation (9) pouvant notamment être dévié radialement en vue de la fixation.
